# EUROPÄISCHE PATENTSCHRIFT

(11) **EP 3 165 063 B1**
(45) Veröffentlichungstag und Bekanntmachung des Hinweises auf die Patenterteilung: **08.12.2021**
(21) Anmeldenummer: 16401076.1
(22) Anmeldetag: 02.11.2016
(51) Int. Cl.: A01C 7/10, A01C 7/20

(54) **EINZELKORNSÄMASCHINE UND VERFAHREN ZUM BETREIBEN EINER EINZELKORN SÄMASCHINE**
SINGLE GRAIN SOWING MACHINE AND METHOD FOR OPERATING SAME
SEMOIR MONOGRAINE ET SON PROCÉDÉ DE FONCTIONNEMENT

(30) Priorität: 06.11.2015 DE 102015119070
(43) Veröffentlichungstag der Anmeldung: 10.05.2017
(73) Patentinhaber: Amazonen-Werke H. Dreyer SE & Co. KG, 49205 Hasbergen (DE)
(72) Erfinder: Mindrup, Tobias, 49080 Osnabrück (DE); Warns, Felix, 27804 Berne (DE); Wien, Thomas, 28816 Stuhr (DE)

(56) Entgegenhaltungen:
- WO-A1-2008/086318
- US-A1- 2011 184 551
- US-A1- 2012 048 159
- US-A1- 2016 165 789

## Beschreibung

Die Erfindung betrifft eine Einzelkornsämaschine sowie ein Verfahren zum Betreiben einer Einzelkornsämaschine.

Einzelkornsämaschinen dienen dazu, Saatgut, beispielsweise Mais, einzeln in vorherbestimmten Abständen auf einer landwirtschaftlichen Fläche abzulegen. Die Arbeitsqualität einer solchen Einzelkornsämaschine bestimmt sich dadurch, wie konstant Parameter wie Ablagetiefe, Sollabstand oder Bedeckung eingehalten werden können.

Die Vereinzelungsqualität wird bei bekannten Systemen sehr präzise über einen Kornflusssensor bestimmt. Ein solcher Kornflusssensor kann beispielsweise durch einen Lichtschrankensensor oder einen Ultraschallsensor gebildet sein. Ein Beispiel für ein solches System ist aus der DE 10 2011 010 100 A1 bekannt. Weitere Systeme und Verfahren mit den Merkmalen der Oberbegriffe der Ansprüche 1 und 7 sind aus WO2008086318, US2016165789, US2011184551 und US2012048159 bekannt.

Der anschließende Weg bis das Korn letztendlich im Boden positioniert wird, wird bei bekannten Maschinen jedoch nicht berücksichtigt. Dieser weitere Weg des Korns ist allerdings entscheidend für die Ablagequalität, insbesondere für die Einhaltung des Sollabstands zwischen den vereinzelten Körnern.

Aufgabe der Erfindung ist es daher, eine Einzelkornsämaschine sowie ein Verfahren zum Betreiben einer Einzelkornsämaschine bereitzustellen, die eine verbesserte Überwachung und Kontrolle der Ablagequalität während der Ausbringung von Saatgut ermöglichen.

Diese Aufgabe wird durch eine Einzelkornsämaschine gemäß Patentanspruch 1 sowie ein Verfahren gemäß Patentanspruch 7 gelöst. Weitere vorteilhafte Ausgestaltungen der Erfindung sind in den abhängigen Ansprüchen angegeben. Gemäß der Erfindung ist es also vorgesehen, dass ein Sensor bereitgestellt wird, über den durch eine Steuereinheit eine Relativbewegung der Säeinheit oder eines Elements der Säeinheit senkrecht zum Boden erfassbar ist. Mit anderen Worten kann über den Sensor der Gleichlauf der Säeinheit oder eines Elements der Säeinheit über die Bodenkontur überwacht werden. Ein stabiler Gleichlauf bewirkt eine kontrollierte Bewegung der Säeinheit über die Bodenkontur und somit eine gute Ablagequalität.

Die Angabe "ein Element der Säeinheit" kann beispielsweise ein Säschar oder eine Fangrolle bezeichnen.

Die Relativbewegung senkrecht zum Boden wird hauptsächlich durch Bodenunebenheiten hervorgerufen. Die Amplitude und Frequenz der Relativbewegung können außerdem von der Fahrgeschwindigkeit der Einzelkornsämaschine abhängen. Die Einzelkornsämaschine kann insbesondere eine gezogene Maschine sein. In diesem Fall entspricht die Fahrgeschwindigkeit der Einzelkornsämaschine der Fahrgeschwindigkeit der Zugmaschine.

Der vorgesehene Sensor kann drahtlos oder über eine drahtgebundene Verbindung mit der Steuereinheit verbunden sein. Über diese Verbindung können Messwerte des Sensors an die Steuereinheit übermittelbar sein. Bei der Steuereinheit kann es sich um einen Bordcomputer der Einzelkornsämaschine oder der Zugmaschine handeln. Insbesondere kann es sich bei der Steuereinheit um ein TIM (Traktor Implement Management) System handeln. Alternativ kann es sich bei der Steuereinheit auch um ein TONI (Telematics On Implement) System handeln.

Die Steuereinheit kann insbesondere so ausgebildet sein, dass sie ein Maß für die Relativbewegung senkrecht zum Boden bestimmt, insbesondere berechnet. Das Maß kann beispielsweise der räumlichen Auslenkung der Säeinheit oder eines Elements der Säeinheit senkrecht zum Boden entsprechen. Das Maß kann insbesondere auch dem zeitlichen Verlauf der räumlichen Auslenkung der Säeinheit oder eines Elements der Säeinheit senkrecht zum Boden entsprechen.

Alternativ oder zusätzlich kann das Maß auch dem zeitlichen Verlauf von Messwerten einer Messgröße des Sensors entsprechen.

Die Steuereinheit kann so ausgebildet sein, dass sie bestimmt, ob das Maß für die Relativbewegung senkrecht zum Boden einem vorherbestimmten Kriterium entspricht. Wenn das Maß dem vorherbestimmten Kriterium nicht entspricht, kann ein optisches und/oder akustisches Warnsignal an eine Bedienperson ausgegeben werden. Dadurch kann eine Bedienperson auf die Gefahr einer ungleichmäßigen Ablage des Saatguts hingewiesen werden, so dass sie entsprechende Gegenmaßnahmen ergreifen kann. Bei dem Warnsignal kann es sich um ein akustisches und/oder optisches Warnsignal handeln.

Die Einzelkornsämaschine kann außerdem eine Anzeigevorrichtung umfassen, die so ausgebildet ist, dass sie die erfasste Relativbewegung und/oder einen oder mehrere Messwerte des Sensors anzeigt. Die Anzeigevorrichtung kann dafür insbesondere mit der Steuereinheit verbunden sein. Die entsprechende Anzeige kann von der Steuereinheit bewirkt werden. Durch die Anzeige kann eine Bedienperson der Einzelkornsämaschine den Gleichlauf der Säeinheit über die Bodenkontur überwachen und gegebenenfalls Schritte ergreifen, um ein "Poltern" der Säeinheit über den Boden zu reduzieren. Dadurch kann wiederum die Ablagequalität verbessert werden.

Über die Anzeigevorrichtung kann alternativ oder zusätzlich das oben genannte Maß für die Relativbewegung senkrecht zum Boden und/oder das genannte Warnsignal ausgegeben werden.

Die Steuereinheit kann insbesondere so ausgebildet sein, dass das Bestimmen, ob das Maß für die Relativbewegung senkrecht zum Boden einem vorherbestimmten Kriterium entspricht, einen Vergleich der Amplitude oder Frequenz des zeitlichen Verlaufs der Auslenkung der Säeinheit oder eines Elements der Säeinheit senkrecht zum Boden oder der Messwerte einer Messgröße des Sensors mit einem Schwellenwert umfasst. Auch Amplitude und Frequenz können mit je einem entsprechenden Schwellenwert verglichen werden. Dem vorherbestimmten Kriterium kann dann nicht entsprochen sein, wenn der Schwellenwert oder die Schwellenwerte überschritten werden.

Die Steuereinheit kann auch so ausgebildet sein, dass sie bei Überschreiten des Schwellenwertes oder der Schwellenwerte eine Geschwindigkeitsreduktion ermittelt und über die Anzeigevorrichtung anzeigt. Die ermittelte Geschwindigkeitsreduktion kann dabei insbesondere von dem Wert abhängen, um den der jeweilige Schwellenwert überstiegen wird. Insbesondere kann die Geschwindigkeitsreduktion umso höher sein, umso mehr der jeweilige Schwellenwert überschritten wird. Dadurch kann die Bedienperson dabei unterstützt werden, die Ablagequalität möglichst rasch wieder auf ein optimales Niveau zu bringen.

Die Steuereinheit kann auch so ausgebildet sein, dass sie die Fahrgeschwindigkeit der Einzelkornsämaschine in Abhängigkeit von der erfassten Relativbewegung und/oder in Abhängigkeit von einem oder mehreren Messwerten des Sensors regelt oder steuert. Dadurch kann die Bedienperson weiter entlastet und die Ablagequalität optimiert werden.

Zu diesem Zweck kann die Steuereinheit der Einzelkornsämaschine insbesondere mit einer Steuereinheit einer Zugmaschine der Einzelkornsämaschine verbindbar sein. Die Verbindung kann insbesondere über ein ISOBUS-System erfolgen.

Der oben genannte Sensor ist erfindungsgemäß ein Drucksensor.

Der Drucksensor ist zum Erfassen eines Schardrucks eines Säschars ausgebildet. Der Schardruck kann als indirekter Indikator für den Gleichlauf der Schareinheit über den Boden angesehen werden. Liegt ein gleichmäßiger Druckverlauf vor, so kann darauf geschlossen werden, dass die Säeinheit, insbesondere das Säschar gleichmäßig über die Erdoberfläche geführt wird. Ein diskontinuierlicher Druckverlauf kann dagegen auf einen unruhigen Lauf der Säeinheit, insbesondere des Säschars, über die Erdoberfläche schließen lassen.

Wenn der Sensor nicht erfindungsgemäß einen Beschleunigungssensor umfasst oder einem solchen entspricht, kann die Beschleunigung der Säeinheit oder eines Elements der Säeinheit senkrecht zum Boden erfasst werden. Aus der Beschleunigung kann wiederum die Auslenkung der Säeinheit oder eines Elements der Säeinheit senkrecht zum Boden bestimmt werden. Über einen Beschleunigungssensor kann also direkt auf die Bewegung der Säeinheit oder eines Elements der Säeinheit geschlossen werden.

Wenn der Sensor nicht erfindungsgemäß einen Winkelsensor umfasst oder einem solchen entspricht, kann der Winkelsensor insbesondere derart angeordnet und ausgebildet sein, dass eine Winkeländerung zwischen einem starren Maschinenrahmen und einem beweglichen Teil der Säeinheit bestimmbar ist. Dieser Winkel kann entweder selbst als Maß für die Relativbewegung der Säeinheit oder eines Elements der Säeinheit senkrecht zum Boden verwendet werden. Alternativ oder zusätzlich kann die Steuereinheit auch so ausgebildet sein, dass sie basierend auf den Winkelwerten eine Auslenkung der Säeinheit oder eines Elements der Säeinheit senkrecht zum Boden bestimmt, insbesondere berechnet.

Wenn der Sensor nicht erfindungsgemäß einen Drehzahlsensor umfasst oder einem solchen entspricht, kann der Drehzahlsensor insbesondere zum Bestimmen der Drehzahl einer Fangrolle und/oder Tragrolle der Einzelkornsämaschine vorgesehen sein. Diese Drehzahl kann als indirektes Maß für die Relativbewegung senkrecht zum Boden verwendet werden.

Die Einzelkornsämaschine kann insbesondere mehrere Sensoren zur Erfassung der vertikalen Relativbewegung der Säeinheit oder eines Elements der Säeinheit zum Boden umfassen. Durch eine Kombination mehrerer Sensoren kann der Gleichlauf über die Bodenkontur genauer bestimmt werden.

Die Einzelkornsämaschine kann mehrere oben beschriebene Säeinheiten umfassen, die insbesondere jeweils einen oder mehrere Sensoren umfassen, um die Relativbewegung der jeweiligen Säeinheit oder eines Elements der jeweiligen Säeinheit senkrecht zum Boden zu erfassen.

Das erfindungsgemäße Verfahren gemäß Anspruch 7 wird von einer oben beschriebenen Steuereinheit ausgeführt. Die Steuereinheit kann dabei eines oder mehrere der oben in Zusammenhang mit der Steuereinheit beschriebenen Merkmale verwirklichen. Das Verfahren kann insbesondere mit einer oben beschriebenen Einzelkornsämaschine durchgeführt werden. Das Verfahren kann somit auch ein Bereitstellen einer oben beschriebenen Einzelkornsämaschine umfassen.

Weitere Merkmale und Vorteile der Erfindung werden nachfolgend anhand der beispielhaften Figur erläutert. Dabei zeigt

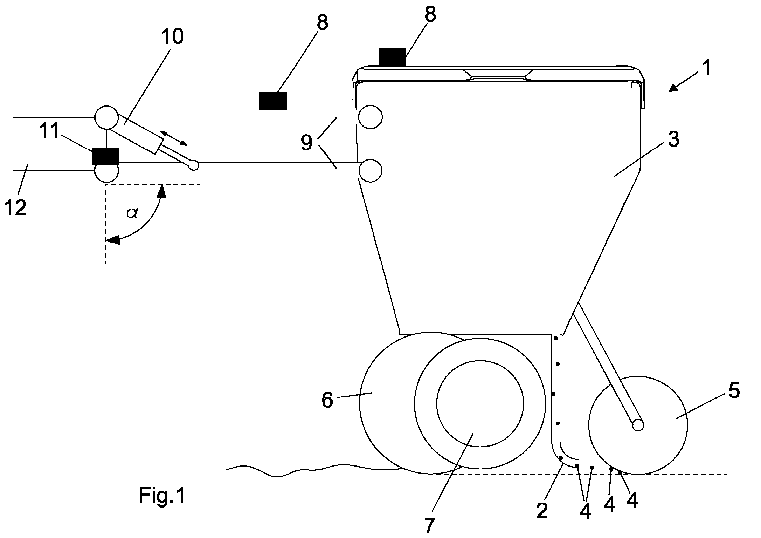

Fig. 1 schematisch eine Säeinheit einer beispielhaften Einzelkornsämaschine.

Fig. 1 zeigt insbesondere eine Säeinheit 1 mit einem Säschar 2, welches an einem Scharkörper 3 angeordnet ist. Innerhalb des Scharkörpers 3 ist außerdem eine (nicht dargestellte) Vereinzelungsvorrichtung angeordnet, um Saatgut zu vereinzeln. Die Vereinzelungsvorrichtung kann beispielsweise eine mit einer Druckdifferenz beaufschlagbare Vereinzelungstrommel oder Vereinzelungsscheibe umfassen. Die Vereinzelungstrommel oder Vereinzelungsscheibe umfasst in Perforationsreihen angeordnete Perforationen, an denen sich das Saatgut anlagern kann, wodurch es zu einer Vereinzelung kommt. Die so vereinzelten Körner können dann über das Säschar 2, welches in diesem Beispiel als Fallrohr ausgebildet ist zur landwirtschaftlichen Fläche gefördert werden. Die aus dem Säschar 2 austretenden Körner 4 werden von einer Fangrolle 5 erfasst und auf der landwirtschaftlichen Fläche abgelegt. Die Fangrolle 5 legt das Saatgut dabei in einer vorbestimmten Ablagetiefe ab. Diese Ablagetiefe kann beispielsweise durch die Tiefeneinstellung eines Scheibenschars 6 bestimmt werden, welches als Furchenöffner dient.

Die Säeinheit 1 umfasst außerdem eine Tragrolle 7, über die sich die Säeinheit 1 auf dem Boden abstützt. Anstelle der Tragrolle 7 könnte auch ein Rad vorgesehen sein.

Die Vereinzelungsqualität des Saatguts am Übergang zum Säschar 2, also am Ausgang der nicht gezeigten Vereinzelungsvorrichtung kann über einen Kornflusssensor bestimmt werden, wie beispielsweise in der DE 10 2011 010 100 A1 gezeigt. Die Ablagequalität des Saatguts 4 auf der landwirtschaftlichen Fläche hängt jedoch auch vom weiteren Transport des Saatguts innerhalb des Säschars 2 sowie am Ausgang des Säschars und beim Kontakt mit der Fangrolle 5 ab. Je gleichmäßiger die Bewegung des Saatguts auf dem Weg zum Boden, umso besser ist die Ablagequalität, da dadurch insbesondere die Abstände zwischen den Saatkörnern, welche durch die Vereinzelungsvorrichtung eingestellt wurde, beibehalten werden kann. Je unruhiger die Säeinheit 1 über den Boden läuft, umso mehr Interaktionen zwischen dem Saatgut 4 und dem Säschar 2 finden statt und umso mehr variiert die Interaktion zwischen dem Saatgut 4 und der Fangrolle 5. Daher ist es erstrebenswert, dass diese Einheit 1 möglichst gleichmäßig über den Boden läuft.

In dem Beispiel der Fig. 1 sind Sensoren vorgesehen, über die durch eine nicht gezeigte Steuereinheit eine Relativbewegung der Säeinheit 1 oder eines Elements der Säeinheit 1 senkrecht zum Boden erfassbar ist.

Insbesondere sind in dem Beispiel Beschleunigungssensoren 8 vorgesehen, über welche die vertikale Beschleunigung des Scharkörpers 3 bzw. eines Tragrahmens 9 bestimmbar ist. Über diese Beschleunigung kann durch die Steuereinheit auf die tatsächliche lineare Auslenkung der Säeinheit 1 geschlossen werden. Je größer diese Auslenkung ist, umso ungenauer wird das Ergebnis der Saatgutablage.

In diesem Beispiel ist außerdem ein Drucksensor innerhalb des Hydraulikzylinders 10 vorgesehen. Der Hydraulikzylinder 10 steuert den Schardruck der Säeinheit 1, insbesondere des Säschars 2. Sind gravierende Drucksprünge über den Drucksensor feststellbar, läuft die Säeinheit 1 unruhig über dem Boden, was auf eine schlechte Ablagequalität schließen lässt. Liegt dagegen ein gleichmäßiger Druckverlauf vor, wird die Säeinheit 1 gleichmäßig über die Erdoberfläche geführt.

Schließlich zeigt Fig. 1 noch einen Winkelsensor 11, über den Winkeländerungen zwischen einem starren Maschinenrahmen 12 und dem beweglichen Tragrahmen 9 der Säeinheit 1 bestimmbar sind. Dieser Winkel wird in der Fig. als Winkel α bezeichnet. Aus den Winkeländerungen kann wiederum auf eine Relativbewegung der Säeinheit 1 senkrecht zum Boden geschlossen werden.

Nicht dargestellt aber ebenso möglich wäre es, der Fangrolle 5 und/oder der Tragrolle 7 einen Drehzahlsensor zuzuordnen. Aus den erfassten Drehzahlen kann ebenfalls auf den Gleichlauf der Säeinheit 1 über den Boden geschlossen werden.

Die in der Fig. 1 nicht dargestellte Steuereinheit kann basierend auf den Messwerten der Sensoren auf die Relativbewegung der Säeinheit 1 oder eines Elements der Säeinheit 1 schließen, diese Relativbewegung also berechnen. Alternativ oder zusätzlich kann die Steuereinheit die Messwerte als Maß für die Relativbewegung direkt verwenden.

Die Steuereinheit kann mit einer ebenfalls nicht dargestellten Anzeigevorrichtung gekoppelt sein, und dort beispielsweise ein Warnsignal zur Anzeige bringen, wenn die erfasste Relativbewegung und/oder einer oder mehrere Messwerte des Sensors einen vorherbestimmten Schwellenwert überschreiten.

Dieses Warnsignal kann auch eine Vorgabe für eine reduzierte Fahrgeschwindigkeit beinhalten. Die reduzierte Fahrgeschwindigkeit kann dabei insbesondere der Soll-Fahrgeschwindigkeit einer der Einzelkornsämaschine zugeordneten Zugmaschine entsprechen. Die reduzierte Fahrgeschwindigkeit kann in Abhängigkeit von dem Wert bestimmt werden, um den die erfasste Relativbewegung und/oder einer oder mehrere Messwerte des Sensors den vorherbestimmten Schwellenwert überschreiten.

Die Steuereinheit kann auch so ausgebildet sein, dass sie die Fahrgeschwindigkeit der Zugmaschine unmittelbar steuert oder regelt, und zwar in Abhängigkeit von der erfassten Relativbewegung und/oder in Abhängigkeit von einem oder mehreren Messwerten der Sensoren.

Es versteht sich, dass in dem beschrieben Ausführungsbeispiel genannte Merkmale nicht auf diese spezielle Kombination beschränkt sind und auch beliebige andere Kombinationen im Einklang mit dem Schutzumfang der beigefügten Ansprüche möglich sind.

## Patentansprüche

1. Einzelkornsämaschine umfassend:
eine Säeinheit (1) mit einem Säschar (2) und einem Rad oder einer Tragrolle (7), wobei sich die Säeinheit (1) über das Rad oder über die Tragrolle (7) auf dem Boden abstützt; und
eine Steuereinheit; wobei ein Sensor (8; 11) vorgesehen ist, über den durch die Steuereinheit eine Relativbewegung der Säeinheit (1) oder eines Elements der Säeinheit (1) senkrecht zum Boden erfassbar ist, **dadurch gekennzeichnet, dass** der Sensor als Drucksensor zum Erfassen des Schardruckes ausgebildet ist.

2. Einzelkornsämaschine nach Anspruch 1, wobei die Steuereinheit so ausgebildet ist, dass sie ein Maß für die Relativbewegung senkrecht zum Boden bestimmt, insbesondere berechnet.

3. Einzelkornsämaschine nach Anspruch 2, wobei die Steuereinheit so ausgebildet ist, dass sie bestimmt, ob das Maß für die Relativbewegung senkrecht zum Boden einem vorherbestimmten Kriterium entspricht.

4. Einzelkornsämaschine nach Anspruch 3, wobei, wenn das Maß dem vorherbestimmten Kriterium nicht entspricht, ein optisches und/oder akustisches Warnsignal an eine Bedienperson ausgegeben wird.

5. Einzelkornsämaschine nach einem der vorangegangenen Ansprüche, wobei die Steuereinheit so ausgebildet ist, dass sie die Fahrgeschwindigkeit der Einzelkornsämaschine in Abhängigkeit von der erfassten Relativbewegung und/oder von einem oder mehreren Messwerten des Sensors regelt oder steuert.

6. Einzelkornsämaschine nach einem der vorangegangenen Ansprüche, umfassend mehrere Sensoren (8; 11) zur Erfassung der vertikalen Relativbewegung der Säeinheit oder eines Elements der Säeinheit zum Boden.

7. Verfahren zum Betreiben einer Einzelkornsämaschine, die eine Säeinheit (1) mit einem Säschar (2) und einem Rad oder einer Tragrolle (7) umfasst, wobei sich die Säeinheit (1) über das Rad oder die Tragrolle (7) auf dem Boden abstützt, umfassend: durch eine Steuereinheit Erfassen der Relativbewegung der Säeinheit (1) oder eines Elements der Säeinheit (1) senkrecht zum Boden mittels eines Sensors (8; 11), **dadurch gekennzeichnet, dass** der Sensor als Drucksensor zum Erfassen des Schardruckes ausgebildet ist.

8. Verfahren nach Anspruch 7, wobei die erfasste Relativbewegung und/oder ein oder mehrere Messwerte des Sensors (8; 11) mit einem vorherbestimmten Schwellenwert verglichen wird/werden und bei Überschreiten des Schwellenwertes ein Warnsignal an eine Bedienperson ausgegeben wird.

9. Verfahren nach Anspruch 7 oder 8, wobei die Fahrgeschwindigkeit der Einzelkornsämaschine in Abhängigkeit von der erfassten Relativbewegung und/oder von einem oder mehreren Messwerten des Sensors (8; 11) geregelt oder gesteuert wird.

## Claims

1. Single-grain sowing machine comprising:
A sowing unit (1) having a sowing coulter (2) and a wheel or a support roller (7), wherein the sowing unit (1) is supported on the ground via the wheel or via the support roller (7); and a control unit;
wherein
a sensor (8; 11) is provided via which a relative movement of the sowing unit (1) or of an element of the sowing unit (1) perpendicular to the ground can be detected by the control unit, **characterized in that**
the sensor is designed as a pressure sensor for detecting the coulter pressure.

2. Single-grain sowing machine according to claim 1, wherein the control unit is designed to determine, in particular calculate, a measure of the relative movement perpendicular to the ground.

3. Single-grain sowing machine according to claim 2, wherein the control unit is designed to determine whether the measure of the relative movement perpendicular to the ground corresponds to a predetermined criterion.

4. Single-grain sowing machine according to claim 3, wherein, if the measure does not correspond to the predetermined criterion, a visual and/or acoustic warning signal is output to an operator.

5. Single-grain sowing machine according to any of the preceding claims, wherein the control unit is designed to regulate or control the driving speed of the single-grain sowing machine as a function of the detected relative movement and/or of one or more measured values of the sensor.

6. Single-grain sowing machine according to any of the preceding claims, comprising a plurality of sensors (8; 11) for detecting the vertical relative movement of the sowing unit or of an element of the sowing unit with respect to the ground.

7. Method for operating a single grain sowing machine comprising a sowing unit (1) having a seed coulter (2) and a wheel or a support roller (7), wherein the sowing unit (1) is supported on the ground by the wheel or support roller (7), comprising:
a control unit
detecting the relative movement of the sowing unit (1) or of an element of the sowing unit (1) perpendicular to the ground by means of a sensor (8; 11), **characterized in that** the sensor is designed as
a pressure sensor for detecting the coulter pressure.

8. Method according to claim 7, wherein the detected relative movement and/or one or more measured values of the sensor (8; 11) is/are compared to a predetermined threshold value, and a warning signal is output to an operator when the threshold value is exceeded.

9. Method according to claim 7 or 8, wherein the driving speed of the individual grain sowing machine is regulated or controlled as a function of the detected relative movement and/or of one or more measured values of the sensor (8; 11).

## Revendications

1. Semoir monograine comprenant :
un élément semeur (1) comportant un soc de semoir (2) et une roue ou un rouleau porteur (7), dans lequel l'élément semeur (1) est supporté au sol au moyen de la roue ou au moyen du rouleau porteur (7) ; et une unité de commande ;
dans lequel
un capteur (8 ; 11) est fourni au moyen duquel un mouvement relatif de l'élément semeur (1) ou d'un élément de l'élément semeur (1) perpendiculaire au sol peut être détecté par l'unité de commande, **caractérisé en ce**
**que** le capteur est conçu sous la forme d'un capteur de pression permettant de détecter la pression d'enterrage de soc.

2. Semoir monograine selon la revendication 1, dans lequel l'unité de commande est conçue de telle sorte qu'elle détermine, en particulier calcule, une mesure pour le mouvement relatif perpendiculaire au sol.

3. Semoir monograine selon la revendication 2, dans lequel l'unité de commande est conçue de telle sorte qu'elle détermine si la mesure pour le mouvement relatif perpendiculaire au sol correspond à un critère prédéterminé.

4. Semoir monograine selon la revendication 3, dans lequel, lorsque la mesure ne correspond pas au critère prédéterminé, un signal d'avertissement optique et/ou acoustique est émis à un opérateur.

5. Semoir monograine selon l'une quelconque des revendications précédentes, dans lequel l'unité de commande est conçue de telle sorte qu'elle régule ou commande la vitesse de déplacement du semoir monograine en fonction du mouvement relatif détecté et/ou d'au moins une valeur mesurée du capteur.

6. Semoir monograine selon l'une quelconque des revendications précédentes, comprenant plusieurs capteurs (8 ; 11) destinés à la détection du mouvement relatif vertical de l'élément semeur ou d'un élément de l'élément semeur par rapport au sol.

7. Procédé de fonctionnement d'un semoir monograine, lequel comprend un élément semeur (1) comprenant un soc de semoir (2) et une roue ou un rouleau porteur (7), dans lequel l'élément semeur (1) est supporté au sol au moyen de la roue ou du rouleau porteur (7), comprenant :
la détection
par une unité de commande du mouvement relatif de l'élément semeur (1) ou d'un élément de l'élément semeur (1) perpendiculairement au sol au moyen d'un capteur (8 ; 11), **caractérisé en ce que** le capteur
est conçu sous la forme d'un capteur de pression permettant de détecter la pression d'enterrage de soc.

8. Procédé selon la revendication 7, dans lequel le mouvement relatif détecté et/ou une ou plusieurs valeurs mesurées du capteur (8 ; 11) sont comparés à une valeur seuil prédéterminée et un signal d'avertissement est émis à un opérateur lorsque la valeur seuil est dépassée.

9. Procédé selon la revendication 7 ou 8, dans lequel la vitesse de déplacement du semoir monograine est régulée ou commandée en fonction du mouvement relatif détecté et/ou d'une ou plusieurs valeurs mesurées du capteur (8 ; 11).
